# EUROPÄISCHE PATENTANMELDUNG

(11) **EP 4 335 620 A1**
(43) Veröffentlichungstag der Anmeldung: **13.03.2024**
(21) Anmeldenummer: 23195070.0
(22) Anmeldetag: 04.09.2023
(51) Int. Cl.: B29C 49/48, B29C 49/52, B65D 1/02, B65D 23/00, B29C 49/42, B29L 31/00

(54) **VORRICHTUNG UND VERFAHREN ZUM UMFORMEN VON KUNSTSTOFFVORFORMLINGEN ZU KUNSTSTOFFBEHÄLTNISSEN**

(30) Priorität: 08.09.2022 DE 102022122887
(71) Anmelder: Krones AG, 93073 Neutraubling (DE)
(72) Erfinder: Senn, Konrad, 93073 Neutraubling (DE); Lappe, Ulrich, 93073 Neutraubling (DE); Tissmer, Bastian, 93073 Neutraubling (DE)
(74) Vertreter: Bittner, Bernhard

(57) **Zusammenfassung**

Die vorliegende Erfindung bezieht sich auf ein Kunststoffbehältnis mit einer Mündung sowie einem Grundkörper, wobei an einer Außenoberfläche des Kunststoffbehältnisses und/oder durch die Außenoberfläche des Kunststoffbehältnisses selbst mittels eines Wandmaterials und in Form zumindest einer Wanderhebung oder zumindest einer Wandsenkung in Form einer Wandstruktur zur Ausbildung einer Behältnisinformation aufweist, sodass die Behältnisinformation auf dem fertigen Kunststoffbehältnis eine Etiketteninformation ersetzt, insbesondere wobei das fertig hergestellte Behältnis frei von einem Etikett ist, und zumindest einem Versteifungsbereich der an einer Außenoberfläche des Kunststoffbehältnisses ausgebildet ist und/oder durch ein Wandmaterial des Kunststoffbehältnisses selbst gebildet ist, insbesondere wobei der Versteifungsbereich mindestens zwei Bereiche an der Außenoberfläche definiert, die durch den mindestens einen Versteifungsbereich voneinander getrennt sind und die Wandstrukturen sich auf mindestens diese zwei Bereiche verteilen.

## Beschreibung

Die vorliegende Erfindung bezieht sich auf ein Kunststoffbehältnis, eine Blasform und ein Verfahren zum Umformen von Kunststoffvorformlingen zu Kunststoffbehältnissen gemäß den jeweiligen Oberbegriffen der jeweiligen Oberbegriffen 1, 8 und 15.

Eine Vorrichtung und ein Verfahren zum Umformen von Kunststoffvorformlingen zu Kunststoffbehältnissen sind aus dem Stand der Technik seit Langem bekannt. Dabei werden üblicherweise erwärmte Kunststoffvorformlinge Umformungsstationen zugeführt und innerhalb dieser Umformungsstationen insbesondere durch Beaufschlagung mit einem gasförmigen oder flüssigen Medium zu Kunststoffbehältnissen umgeformt. Dabei ist es aus dem Stand der Technik einerseits bekannt, die Kunststoffvorformlinge durch ein gasförmiges Medium und insbesondere Druckluft zu expandieren, neuerdings ist es jedoch auch bekannt geworden, die Kunststoffvorformlinge mittels einer Flüssigkeit zu expandieren, insbesondere mittels eines abzufüllenden Getränks. Die vorliegende Erfindung ist für beide Vorgehensweisen anwendbar.

Erfindungsgemäß handelt es sich bei dem hier beschriebenen Kunststoffbehältnis um ein solches mit einer Mündung sowie einem Grundkörper, wobei an einer Außenoberfläche des Kunststoffbehältnisses und/oder durch die Außenoberfläche des Kunststoffbehältnisses selbst mittels eines Wandmaterials und in Form zumindest einer Wanderhebung oder zumindest einer Wandsenkung in Form einer Wandstruktur zur Ausbildung einer Behältnisinformation aufweist, sodass die Behältnisinformation auf dem fertigen Kunststoffbehältnis eine Etiketteninformation ersetzt, insbesondere wobei das fertig hergestellte Behältnis frei von einem Etikett ist, und zumindest einen Versteifungsbereich, der an einer Außenoberfläche des Kunststoffbehältnisses ausgebildet ist und/oder durch ein Wandmaterial des Kunststoffbehältnisses selbst gebildet ist aufweist, insbesondere wobei der Versteifungsbereich mindestens zwei Bereiche an der Außenoberfläche definiert, die durch den mindestens einen Versteifungsbereich voneinander getrennt sind und die Wandstrukturen sich auf mindestens diese zwei Bereiche verteilen.

Durch den Verzicht auf ein Etikett ist somit eine "No-Label" Flasche erzeugt.

Der Versteifungsbereich kann zum Beispiel in haptischer Weise, auch vorzugsweise für die menschliche Hand und/oder menschlichen Finger fühlbar, eine Materialverdickung oder Verdünnung der Wanddicke des Behältnisses sein (auch kommen Wandrillen oder flächig ausgebildete Wandverdünnungen in Betracht), welche dem gesamten Wandkonstrukt des Behältnisses mehr Stabilität verlangt und gleichzeitig für eine Materialersparnis sorgt. Grundsätzlich dienen nämlich Versteifungsbereiche in einer Behältniswand dazu, um den restlichen Wandflächenanteil oder Wandvolumenanteil zu verringern. Das heißt, die übrigen Stellen der Behältniswand sind daher umso dünner ausgebildet.

Es können insofern besonders leichtgewichtige Behältnisse erzeugt werden, die jedoch im Bereich des Negativabbilds des Prägebereichs zwischen den einzelnen Schriftzugelementen entsprechende Wandverdickungen aufweist.

Selbst unter der Annahme, dass No-Label Flaschen im Stand der Technik bekannt wären, so hätten diese Flaschen eine sehr große, so genannte "Display-Fläche", auf denen die Informationen aufgebracht sind. Diese haben den Nachteil, dass große, sphärische, insbesondere glatte Flächen nicht immer die optimalen statischen Eigenschaften haben. Somit sind solche No-Label Flaschen, unter Druckbelastung (also Topload, Burstpressure, Termostabilität oder Bodenfreiheit) wenig stabil.

Ein Kern der Erfindung ist es daher unter anderem, eine nicht durchgängige Display-Fläche zu haben, die sich vorteilhaft mit Stützelementen (also zum Beispiel Rippen, Materialverdickungen und/oder Rillen mit Informationsflächen) vermischen können. Somit ist es möglich, leichte No-Label Flaschen zu fertigen.

Auch können entsprechende Versteifungselemente in der Behältniswand abseits des Prägeabschnitts, das heißt außerhalb des Prägeabschnitts, auftreten oder angeordnet sein. Ein Versteifungsbereich muss daher nicht zwangsläufig einen Prägeabschnitt, zum Beispiel in vertikaler Richtung (parallel zur Behältnislängsachse) durchwandern, sondern dieser kann auch tatsächlich entweder an der Behältniswand und/oder auch am Behältnisboden und/oder im Halsbereich des Behältnisses angeordnet sein.

Gemäß zumindest einer Ausführungsform ist der Versteifungsbereich im fertigen Kunststoffbehältnis in Form zumindest einer Versteifungsrippe ausgebildet.

Bei einer Versteifungsrippe kann es sich im Sinne der vorliegenden Erfindung um ein längliches Element handeln, welches streifenförmig ausgebildet ist und eine Wandverdickung oder Wandverdünnung bildet, im Vergleich zur restlichen Wandstärke des Behältnisses, wodurch nicht nur eine Materialersparnis möglich ist, sondern die Versteifungsbereiche an sich besonders steif ausgebildet sind, sodass möglichst wenig Versteifungsbereiche an oder in der Behältniswand von Nöten sind, um dem Behältnis ein ausreichende Stabilität zu verleihen. Gemäß zumindest einer Ausführungsform beträgt eine Wanddicke des Grundkörpers an einer Stelle des größten Behältnisdurchmessers kleiner als 0,15 mm und bevorzugt höchstens 0,14 mm und wenigstens 0,11 mm.

Gemäß zumindest einer Ausführungsform beträgt eine minimale Gewichtsbelastungsgrenze des teilweise befüllten Kunststoffbehältnisses entlang einer Behältnislängsachse wenigstes 20 kg und bevorzugt höchstens 30 kg.

Gemäß zumindest einer Ausführungsform ist die Behältnisinformation aus einer Gruppe von Eigenschaften und/oder Informationen des Behältnisses ausgewählt. Diese Gruppe umfasst gute Lesbarkeit, Mindestbeschriftungsgröße, Bezeichnung eines Lebensmittels insbesondere als Abfüllprodukt, Nettofüllmenge, Mindesthaltbarkeitsdatum des Füllprodukts, Ursprungsland oder Herkunftsort (Name der Firma oder die Anschrift des Lebensmittelunternehmens), Allergien Kennzeichnung, Zutatenverzeichnis, Quantitative Angabe der Zutaten, Aufbewahrungs- und Verwendungsbedingungen, Alkoholgehalt des Füllprodukts und/oder Nährwertdeklaration.

Gemäß zumindest einer Ausführungsform erhöhen das Versteifungselement statische Eigenschaften des Kunststoffbehältnisses, wie eine Längsachsenbelastung (Topload) und/oder Durchmesserbelastung (Sideload).

Gemäß zumindest einer Ausführungsform folgt der Verlauf des Versteifungselements auch Kraftverläufen im Falle einer Kraftbelastung des Kunststoffbehältnisses und/oder entspricht oder zumindest teilweise ähnelt das Versteifungselement organischen Formen, wie zum Beispiel Rippen in Libellenflügeln.

Gemäß zumindest einer Ausführungsform wurde das Kunststoffbehältnis vor einem Verschließen mit Stickstoff befüllt.

Gemäß zumindest einer Ausführungsform betrifft die hier beschriebene Erfindung des Weiteren ein Verfahren zum Umformen von Kunststoffvorformlingen zu Kunststoffbehältnissen, wobei an einem beweglichen Träger wenigstens eine und bevorzugt eine Vielzahl von Umformungsstationen zum Umformen der Kunststoffvorformlinge zu den Kunststoffbehältnissen angeordnet ist und diese Umformungsstationen wenigstens zeitweise während des Umformungsvorgangs entlang eines vorgegebenen Transportpfads bewegt werden, wobei die Umformungsstationen jeweils Blasformanordnungen aufweisen, wobei Blasformteile dieser Blasformanordnungen zum Öffnen und Schließen der Blasformanordnungen bewegt werden, und einem geschlossenen Zustand der Blasformanordnung in einem durch die Blasformteile gebildeten Hohlraum die Kunststoffvorformlinge durch Beaufschlagung mit einem fließfähigen Medium zu den Kunststoffbehältnissen umgeformt werden.

Gemäß zumindest einer Ausführungsform weist zumindest eine dem Kunststoffvorformling zugewandte Innenfläche der Blasformteile zumindest einen Prägeabschnitt in Form zumindest einer Oberflächenerhebung und/oder einer Oberflächensenkung zum Ausbilden zumindest einer Wanderhebung oder zumindest einer Wandsenkung zur Ausbildung einer Behältnisinformation an dem späteren fertigen Behältnis auf, sodass die Behältnisinformation ein Negativabbild des Prägeabschnittes ist, und/oder es wird auf das fertige Behältnis eine digitale Wassermarke, insbesondere als die Behältnisinformation, aufgebracht. Insofern schlägt die vorliegende Erfindung zwei alternative oder sich ergänzende Aufbringungsmethoden einer Behältnisinformation vor.

Die Behältnisinformation jedenfalls ist durch die Behältniswand selbst gebildet. Dies schließt die Einbringung einer Codierung, wie dem Wasserzeichen, mit ein. Das digitale Wasserzeichen ist eine Technologie zum Verbergen von Informationen, die z. B. bei der steganografischen Kodierung von Druckerzeugnissen nützlich ist, um mehrere Symbole als Nutzdaten zu übertragen. So können beispielsweise auf die Verpackung eines Einzelhandelsprodukts, zum Beispiel die hier beschriebenen Kunststoffbehältnisse, gedruckte Grafiken mit einem digitalen Wasserzeichen versehen werden, das die GTIN-Kennung (Global Trade Identification Number) des Produkts enthält. Bekannte digitale Wasserzeichenverfahren sind unter anderem in den Patentschriften US 6,590,996 und US 8,199,969, beschrieben.

Gemäß zumindest einer Ausführungsform wird ein digitales Wasserzeichen verwendet, um sicherzustellen, dass die fertigen Behältnisse, die miteinander kombiniert werden sollen, richtig aufeinander abgestimmt sind. Ein Beispiel sind Behältnispackungen etc.

Ein Wasserzeichensystem besteht aus zwei Komponenten: Der Embedder bringt die Wasserzeicheninformation in das Medium, also zum Beispiel in die Behältniswand, ein und der Detektor kann sie dann wieder auslesen. Jedes Wasserzeichensystem besitzt bestimmte Eigenschaften, die abhängig von dem Anwendungsgebiet des Wasserzeichens sind.

Gemäß zumindest einer Ausführungsform werden digitale Wasserzeichen eingesetzt, um eine wachsende Art von Betrug im Einzelhandel - den Austausch von Barcodes - zu reduzieren.

Bei einer bevorzugten Ausführungsform handelt es sich bei dem bewegbaren Träger um einen drehbaren Träger. Dies bedeutet, dass die wenigstens eine Umformungsstation und bevorzugt eine Vielzahl von Umformungsstationen an einem drehbaren Träger (auch als Blasrad bezeichnet) angeordnet sind. Damit werden bei einer Bewegung des Trägers, bei der es sich insbesondere um eine Drehbewegung handelt, die Umformungsstationen und damit insbesondere auch die zu expandierenden Kunststoffvorformlinge entlang einer kreisförmigen und/oder im Wesentlichen kreisförmigen Bahn bewegt.

Bei einem weiteren bevorzugten Verfahren weist die Blasformanordnung zwei Seitenteile auf, die bezüglich einander zum Öffnen und Schließen der Blasformen geschwenkt werden. Dabei erfolgt bevorzugt eine Schwenkung um eine vertikale Achse und/oder um eine Achse, die parallel zu dem zu expandierenden Kunststoffvorformling angeordnet ist.

Bevorzugt weisen die Blasformanordnungen auch noch ein Bodenteil auf, welches gemeinsam mit den beiden Seitenteilen den besagten Hohlraum ausbildet.

Bei einer weiteren vorteilhaften Ausführungsform weisen die Umformungsstationen (jeweils) stangenförmige Körper bzw. Reckstangen auf, welche in die Kunststoffvorformlinge einführbar sind, um diese in deren Längsrichtung zu dehnen. Besonders bevorzugt handelt es sich damit bei einer entsprechenden Umformungsvorrichtung um eine Blasformmaschine und insbesondere um eine Streckblasmaschine.

Wie oben erwähnt, kann es sich bei dem Medium zum Expandieren der Kunststoffvorformlinge um ein gasförmiges oder auch ein flüssiges Medium handeln.

Im Rahmen der Erfindung wurde nämlich erkannt, dass üblicherweise Kunststoffbehälter mit einem Etikett versehen sind, auf welchem eine Behältnisinformation abgebildet ist. Bei der Behältnisinformation kann es sich zum Beispiel die Angabe einer Behältnisgröße, um eine Volumenangabe des Behältnisses oder um sonstige Informationen über das abzufüllende Getränk handeln.

Dieses Etikett muss bisher jedoch in aufwendiger Weise bei einem Recyclingvorgang zunächst von der Behältnisflasche entfernt werden. Dieser Recyclingvorgang ist nicht nur zeitaufwendig, sondern ebenso mit gewissen Kosten belastet.

Um daher den gesamten Herstellungsprozess nachhaltiger zu gestalten, haben die Erfinder erdacht, dass durch einen vorzugsweise vollständigen Verzicht auf Etiketten entsprechende Behältnisinformationen, also zum Beispiel Etikettenangaben (Abdruck auf den Etiketten) auch direkt auf die Außenwand des Behältnisses aufgebracht oder durch die Außenwand selbst ausgebildet werden können.

Vorzugsweise wird daher auf sämtliche Etiketten verzichtet, sodass der Recyclingprozess diesen kostenintensiven und mitunter langwierigen Prozess verzichtet werden kann.

Dies ist nicht nur material-, sondern auch energieverbrauchsschonend für den gesamten Recyclingprozess.

Eine Aufgabe der vorliegenden Erfindung ist es daher, in besonders einfacher und kostengünstiger Art und Weise ein Verfahren zum Herstellen von Behältnissen anzubieten, bei welchem ein späterer Recyclingvorgang der Behältnisse auf eine Ablösung von Etiketten verzichtet.

Diese Aufgabe wird durch den Gegenstand des Anspruchs 1 sowie durch den Gegenstand des Vorrichtungsanspruches 8 erreicht.

Gemäß zumindest einer Ausführungsform ist das Verfahren dadurch gekennzeichnet, dass die Behältnisinformation auf dem fertigen Kunststoffbehältnis eine Etiketteninformation ersetzt und das dann fertig hergestellte Behältnis, vorzugsweise frei, von einem Etikett ist. Es wäre zudem denkbar, dass ein Teil der Verbraucherinformation oder andere Informationen auf dem Verschluss angebracht der aufgedruckt sind, wie zum Beispiel ein Text, ein QR Code, etc.

Gemäß zumindest einer Ausführungsform wird während des Umformungsvorgangs das sich ausdehnende Kunststoffbehältnis durch das fließfähige Medium gegen diese Innenfläche gepresst, sodass durch diese Druckbeaufschlagung der Prägeabschnitt auf der Außenfläche des Kunststoffbehältnisses als ein Negativabbild die Behältnisinformation hinterlässt.

Während des, als beispielhaft angenommen, Streckblasprozesses wird daher das Wandmaterial des sich ausdehnenden Kunststoffvorformlings gegen die Wand gedrückt und in die Vertiefungen und/oder an die Erhebungen auf der Innenfläche des Seitenteils aufgedrückt, sodass ein negatives Druckabbild entsteht, und zwar auf der Außenfläche des Kunststoffvorformlings.

Dieses negative Druckabbild ist daher die hier beschriebene Behältnisinformation.

Gemäß zumindest einer Ausführungsform weist der Prägeabschnitt erhabene Bereiche (zu engl.: debossed areas) und/oder vertiefte Bereiche (zu engl.: embosses areas) auf.

Über derartige erhabene und/oder vertiefte Bereiche kann man vorzugsweise auch mit der glatten Hand darüberstreichen und diese haptisch erfühlen.

Zum Beispiel wird die Behältnisinformation mit einer Farbe zumindest stellenweise bedeckt. Dies kann durch Farbrollen geschehen, welche über den Schriftzug der Behältnisinformation abgerollt werden. In Frage kommen jedoch auch andere Farbaufbringverfahren. Bei einem derartigen Verfahren werden nur die erhabenen Stellen des Behälters mit Farbe versehen und sind somit besser lesbar. Bei der Farbe kann es sich insbesondere um Farbe handeln, welche mit UV Strahlen vernetzt bzw. ausgehärtet werden können.

Zudem kann die Behältnisinformation Buchstaben vorgegebener Größe aufweisen. Hierbei kann als Maß eine Buchstabenmittellänge verwendet werden.

Gemäß zumindest einer Ausführungsform ist der Prägeabschnitt derart ausgebildet und/oder angeordnet und/oder an solchen Orten an der Innenfläche des Seitenteils positioniert, dass die Behältnisinformation am fertigen Kunststoffbehältnis zumindest teilweise mit einer Milchglasstruktur an der Außenwand des Kunststoffbehältnisses gebildet ist.

Gemäß zumindest einer Ausführungsform wird nach dem Umformungsvorgang zumindest der Prägeabschnitt zumindest stellenweise mittels einer Strahlungs- und/oder Erwärmungsquelle behandelt, um so eine Materialstrukturveränderung zu erzeugen, insbesondere wobei die Strahlungs- und/oder Erwärmungsquelle eine Strahlungsquelle, zum Beispiel eine Laserquelle, umfasst, welche auf das Material der äußeren Behältniswand, also auf den die Behältnisinformation, trifft.

Gemäß zumindest einer Ausführungsform ist die Materialstrukturveränderung durch einen zumindest teilweise auskristallisierten Bereich gebildet.

Bei einer "Materialstrukturveränderung" im Sinne der hier vorliegenden Erfindung kann es sich insbesondere auch um solche Bereiche an der Außenfläche handeln, welche nach dem eigentlichen Fertigstellen, das heißt, nach dem eigentlichen Ausblasen der Kunststoffvorformlinge, einer Nachbehandlung derart unterzogen wurden, dass sich die Materialstruktur verändert. Dies kann bereits eine Milchglaserzeugung oder eine Veränderung einer Transparenz des Wandmaterials oder einer Veränderung einer Außenstruktur, beispielsweise eine Rauhigkeit oder einen sonstigen Nachbehandlungseffekt handeln.

Im Folgenden wird eine Vorrichtung zum Umformen von Kunststoffvorformlingen zu Kunststoffbehältnissen beansprucht.

Alle für das hier beschriebene Verfahren offenbarten Merkmale sind daher auch für die hier beschriebene Vorrichtung offenbart und umgekehrt.

Die hier beschriebene e Vorrichtung zum Umformen von Kunststoffvorformlingen zu Kunststoffbehältnissen weist einen beweglichen Träger auf, wobei an dem Träger wenigstens eine und bevorzugt eine Vielzahl von Umformungsstationen zum Umformen der Kunststoffvorformlinge zu den Kunststoffbehältnissen angeordnet ist und diese Umformungsstationen wenigstens zeitweise während des Umformungsvorgangs entlang eines vorgegebenen Transportpfads bewegbar sind, wobei die Umformungsstationen jeweils Blasformanordnungen aufweisen, wobei die Blasformteile dieser Blasformanordnungen zum Öffnen und Schließen der Blasformanordnungen bewegbar sind, und in einem geschlossenen Zustand der Blasformanordnung in einem durch die Blasformteile gebildeten Hohlraum die Kunststoffvorformlinge durch Beaufschlagung mit einem fließfähigen Medium zu den Kunststoffbehältnissen umformbar sind.

Die Vorrichtung ist dadurch gekennzeichnet, dass zumindest eine dem Kunststoffvorformling zugewandte Innenfläche der Blasformteile zumindest einen Prägeabschnitt in Form zumindest einer Oberflächenerhebung und/oder einer Oberflächensenkung an der Innenfläche zum Ausbilden zumindest einer Wanderhebung oder zumindest einer Wandsenkung zur Ausbildung einer Behältnisinformation an dem fertigen Behältnis aufweist, sodass die Behältnisinformation ein Negativabbild des Prägeabschnittes ist, insbesondere sodass dieser als Behältnisinformation ausgebildeter Prägeabschnitt eine Etiketteninformation ersetzt und das dann fertig hergestellte Behältnis frei von einem Etikett ist und/oder es wird auf das fertige Behältnis eine digitale Wassermarke, insbesondere als die Behältnisinformation, aufgebracht.

Gemäß zumindest einer Ausführungsform ist der Prägeabschnitt durch zumindest zwei entlang der Innenfläche zumindest eines der Seitenteile benachbarte Segment-Prägeabschnitte gebildet, wobei zwischen den Segment-Prägeabschnitten zumindest ein Versteifungsbereich ausgebildet wird.

Es kann sich daher bei den Segment-Prägeabschnitten jeweils um einen einzigen Buchstaben oder eine Buchstabenfolge, zum Beispiel einen Schriftzug, handeln. Entsprechende Versteifungsbereiche im fertigen Behältnis können insbesondere durch die Ausformung der Innenfläche zumindest eines Seitenteils und/oder durch entsprechende andere Mittel des als beispielhaft angenommenen Streckblasprozesses erzeugt werden.

Gemäß zumindest einer Ausführungsform wird der Versteifungsbereich des Kunststoffbehältnisses mittels zumindest einer Oberflächenerhebung und/oder einer Oberflächensenkung an der Innenfläche zumindest eines Seitenteils gebildet, wobei diese Erhebung oder Senkung von solchen verschieden sind, welche die Behältnisinformation ausbilden.

Der Versteifungsbereich kann zum Beispiel in haptischer Weise auch vorzugsweise für die menschliche Hand und/oder menschlichen Finger fühlbar, eine Materialverdickung oder Verdünnung der Wanddicke des Behältnisses sein (auch kommen Wandrillen oder flächig ausgebildete Wandverdünnungen in Betracht), welche dem gesamten Wandkonstrukt des Behältnisses mehr Stabilität verlangt und gleichzeitig für eine Materialersparnis sorgt. Grundsätzlich dienen nämlich Versteifungsbereiche in einer Behältniswand dazu, um den restlichen Wandflächenanteil oder Wandvolumenanteil zu verringern. Das heißt, die übrigen Stellen der Behältniswand sind daher umso dünner ausgebildet.

Es können insofern besonders leichtgewichtige Behältnisse erzeugt werden, die jedoch im Bereich des Negativabbilds des Prägebereichs zwischen den einzelnen Schriftzugelementen entsprechende Wandverdickungen aufweist.

Selbst unter der Annahme, dass No-Label Flaschen im Stand der Technik bekannt wären, so hätten diese Flaschen eine sehr große, so genannte "Display-Fläche", auf denen die Informationen aufgebracht sind. Diese haben den Nachteil, dass große, sphärische, insbesondere glatte Flächen nicht immer die optimalen statischen Eigenschaften haben. Somit sind solche No-Label Flaschen, unter Druckbelastung (also Topload, Burstpressure, Termostabilität oder Bodenfreiheit) wenig stabil.

Ein Kern der Erfindung ist es daher, unter anderem, eine nicht durchgängige Display-Fläche zu haben, die sich vorteilhaft mit Stützelementen (also zum Beispiel Rippen, Materialverdickungen und/oder Rillen mit Informationsflächen) vermischen können. Somit ist es möglich, leichte No-Label Flaschen zu fertigen.

Auch können entsprechende Versteifungselemente in der Behältniswand abseits des Prägeabschnitts, das heißt außerhalb des Prägeabschnitts, auftreten oder angeordnet sein. Ein Versteifungsbereich muss daher nicht zwangsläufig einen Prägeabschnitt, zum Beispiel in vertikaler Richtung (parallel zur Behältnislängsachse) durchwandern, sondern dieser kann auch tatsächlich entweder an der Behältniswand und/oder auch am Behältnisboden und/oder im Halsbereich des Behältnisses angeordnet sein.

Gemäß zumindest einer Ausführungsform ist der Versteifungsbereich im fertigen Kunststoffbehältnis in Form zumindest einer Versteifungsrippe ausgebildet.

Bei einer Versteifungsrippe kann es sich im Sinne der vorliegenden Erfindung um ein längliches Element handeln, welches streifenförmig ausgebildet ist und eine Wandverdickung oder Wandverdünnung bildet, im Vergleich zur restlichen Wandstärke des Behältnisses, wodurch nicht nur eine Materialersparnis möglich ist, sondern die Versteifungsbereiche an sich besonders steif ausgebildet sind, sodass möglichst wenig Versteifungsbereiche an oder in der Behältniswand von Nöten sind um dem Behältnis ein ausreichende Stabilität zu verleihen.

Im Folgenden wird die hier beschriebene Patentanmeldung anhand von Figuren näher beschrieben:

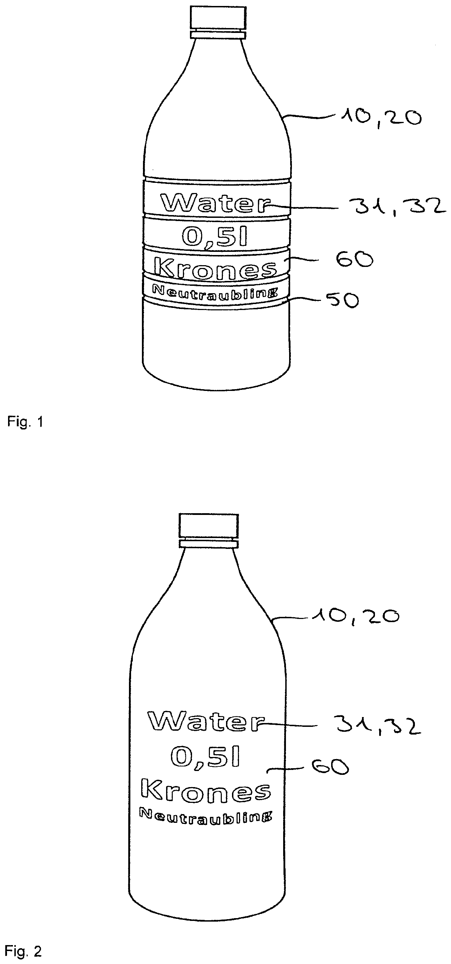

Die Figur 1 zeigt ein hier beanspruchtes erfindungsgemäßes Kunststoffbehältnis 20 mit vier Versteifungsbereichen 50 in Form von entlang des Behältnisumfanges angeordneter Rillen, zwischen denen in Längsrichtung jeweils eine erhabene Beschriftung 32 angegeben ist, nämlich die folgenden Wörter "Water", "0,5 I", "Krones" und "Neutraubling". Jedes der Wörter stellt einzeln oder in Summe die hier beschriebene Behältnisinformation dar, die aus dem Material der Seitenwand des Behältnisses 20 gebildet ist. Die Rillen geben einzelne Versteifungsbereiche 50 wieder.

Außerdem zeigt die Figur 1, dass jeder Versteifungsbereiche 50 statische Eigenschaften des Kunststoffbehältnisses 20, wie eine Längsachsenbelastung (Topload) und/oder Durchmesserachsenbelastung (Sideload) erhöht. Es handelt sich daher bei dem hier vorgestelltem Kunststoffbehältnis 20 nicht nur um eine No-Label Flasche, sondern auch um eine solche, welche durch die Versteifungsbereiche 50 besonders belastungsstabil ist.

Die Figur 2 zeigt den Stand der Technik mit einem Beschriftungszug 32 mit vier entlang der Behältniswand ausgeschriebenen Wörtern, wobei zwischen diesen einzelnen Beschriftungen, also Wörtern, keine Versteifungsbereiche 50 angeordnet sind. Das Behältnis 20 der Figur 2 ist nicht besonders belastungsstabil, insbesondere wenn es um eine Stapelung des Behältnisses innerhalb einer Palette geht.

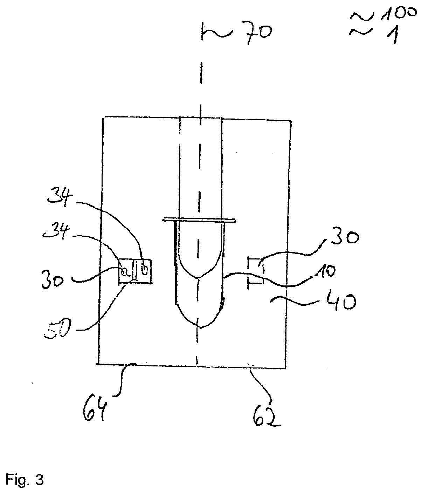

Figur 3 zeigt ein Verfahren 100 zum Umformen von Kunststoffvorformlingen 10 zu Kunststoffbehältnissen 20, wobei an einem beweglichen Träger wenigstens eine und bevorzugt eine Vielzahl von Umformungsstationen 4 zum Umformen der Kunststoffvorformlinge 10 zu den Kunststoffbehältnissen 20 angeordnet ist und diese Umformungsstationen 4 wenigstens zeitweise während des Umformungsvorgangs entlang eines vorgegebenen Transportpfads bewegt werden, wobei die Umformungsstationen 4 jeweils Blasformanordnungen 6 aufweisen, wobei Blasformteile 62, 64 dieser Blasformanordnungen 6 zum Öffnen und Schließen der Blasformanordnungen 6 bewegt werden, und einem geschlossenen Zustand der Blasformanordnung 6 in einem durch die Blasformteile 62, 64 gebildeten Hohlraum die Kunststoffvorformlinge 10 durch Beaufschlagung mit einem fließfähigen Medium zu den Kunststoffbehältnissen 20 umgeformt werden.

Figur 3 zeigt, dass zumindest eine dem Kunststoffvorformling 10 zugewandte Innenfläche der Blasformteile 62, 64, zumindest einen Prägeabschnitt 30 in Form zumindest einer Oberflächenerhebung und/oder einer Oberflächensenkung an der Innenfläche zum Ausbilden zumindest einer Wanderhebung oder zumindest einer Wandsenkung als spätere Behältnisinformation an dem fertigen Behältnis aufweist, sodass die Behältnisinformation ein Negativabbild 31 des Prägeabschnittes 30 ist, und/oder es wird auf das fertige Behältnis eine digitale Wassermarke, insbesondere als die Behältnisinformation, aufgebracht.

Figur 3 ist zudem rein schematisch zu entnehmen, dass der Prägeabschnitt 30 erhabene Bereiche (zu engl.: debossed areas) und/oder vertiefte Bereiche (zu engl.: embosses areas) aufweist.

Zudem ist in Figur 3 eine Vorrichtung 1 zum Umformen von Kunststoffvorformlingen 10 zu Kunststoffbehältnissen 20 gezeigt, wobei an einem beweglichen Träger wenigstens eine und bevorzugt eine Vielzahl von Umformungsstationen 4 zum Umformen der Kunststoffvorformlinge 10 zu den Kunststoffbehältnissen 20 angeordnet ist und diese Umformungsstationen 4 wenigstens zeitweise während des Umformungsvorgangs entlang eines vorgegebenen Transportpfads bewegbar sind, wobei die Umformungsstationen 4 jeweils Blasformanordnungen 6 aufweisen, wobei die Blasformteile 62, 64 dieser Blasformanordnungen 6 zum Öffnen und Schließen der Blasformanordnungen 6 bewegbar sind, und in einem geschlossenen Zustand der Blasformanordnung 6 in einem durch die Blasformteile 62, 64 gebildeten Hohlraum die Kunststoffvorformlinge 10 durch Beaufschlagung mit einem fließfähigen Medium zu den Kunststoffbehältnissen 20 umformbar sind.

Desweitern ist Figur 3 zu entnehmen, dass der Prägeabschnitt 30 der Vorrichtung 1 durch zumindest zwei entlang der Innenfläche zumindest eines der Seitenteile 40 benachbarte Segment-Prägeabschnitte 34 gebildet ist, wobei zwischen den Segment-Prägeabschnitten 34 zumindest ein Versteifungsbereich 50 erzeugender Abschnitt, insbesondere in Form einer Wanddickenveränderung ausgebildet wird sowie der Versteifungsbereich 50 des Kunststoffbehältnisses 20 mittels zumindest einer Oberflächenerhebung und/oder einer Oberflächensenkung an der Innenfläche zumindest eines Seitenteils 40 gebildet wird, wobei diese Erhebung oder Senkung von solchen verschieden sind, welche die Behältnisinformation ausbilden und, dass der Versteifungsbereich 50 im fertigen Kunststoffbehältnis 20 in Form zumindest einer Versteifungsrippe ausgebildet ist.

### Bezugszeichenliste

- 1: Vorrichtung
- 4: Umformungsstation
- 6: Blasformanordnung
- 10: Kunststoffvorformling
- 20: Kunststoffbehältnis
- 30: Prägeabschnitt
- 31: negativer Prägeabschnitt
- 32: Schrift
- 34: Segment-Prägeabschnitte
- 40: Seitenteil
- 50: Versteifungsbereich
- 60: Behältniswand
- 62: Blasformteil
- 64: Blasformteil
- 70: Schwenkachse
- 100: Verfahren
- 201: Mündung
- 202: Grundkörper

## Patentansprüche

1. Kunststoffbehältnis (20) mit einer Mündung (201) sowie einem Grundkörper (202), wobei
- an einer Außenoberfläche des Kunststoffbehältnisses (20) und/oder durch die Außenoberfläche des Kunststoffbehältnisses (20) selbst mittels eines Wandmaterials und in Form zumindest einer Wanderhebung oder zumindest einer Wandsenkung in Form einer Wandstruktur, eine Behältnisinformation angebracht ist, sodass die Behältnisinformation auf dem fertigen Kunststoffbehältnis (20) eine Etiketteninformation ersetzt, insbesondere wobei das fertig hergestellte Behältnis (20) frei von einem Etikett ist, und
- zumindest ein Versteifungsbereich (50) an einer Außenoberfläche des Kunststoffbehältnisses (20) ausgebildet ist und/oder durch ein Wandmaterial des Kunststoffbehältnisses (20) selbst gebildet ist, insbesondere wobei der Versteifungsbereich (50) mindestens zwei Bereiche an der Außenoberfläche definiert, die durch den mindestens einen Versteifungsbereich (50) voneinander getrennt sind,
**dadurch gekennzeichnet, dass**
die Wandstrukturen sich auf mindestens diese zwei Bereiche verteilen.

2. Kunststoffbehältnis (20) nach Anspruch 1,
**dadurch gekennzeichnet, dass**
eine Wanddicke des Grundkörpers (202)an einer Stelle des größten Behältnisdurchmessers kleiner als 0,15 mm, und bevorzugt kleiner als 0,14 mm und besonders bevorzugt kleiner als 0,11 mm ist.

3. Kunststoffbehältnis (20) nach Anspruch 1 oder 2,
**gekennzeichnet, durch**
eine minimale Gewichtsbelastungsgrenze des befüllten und verschlossenen Kunststoffbehältnisses (20) entlang einer Behältnislängsachse (70) wenigstens 20 kg, bevorzugt wenigstens 30kg beträgt, besonders bevorzugt 35 kg.

4. Kunststoffbehältnis (20) nach zumindest einem der vorhergehenden Ansprüche,
**gekennzeichnet, durch**
die Behältnisinformation aus einer Gruppe von Eigenschaften und/oder Informationen des Behältnisses (20) ausgewählt ist, wobei die Gruppe umfasst: gute Lesbarkeit, Mindestbeschriftungsgröße, Bezeichnung eines Lebensmittels insbesondere als Abfüllprodukt, Nettofüllmenge, Mindesthaltbarkeitsdatum des Füllprodukts, Ursprungsland oder Herkunftsort (Name der Firma oder die Anschrift des Lebensmittelunternehmens), Allergien Kennzeichnung, Zutatenverzeichnis, Quantitative Angabe der Zutaten, Aufbewahrungs- und Verwendungsbedingungen, Alkoholgehalt des Füllprodukts und/oder Nährwertdeklaration.

5. Kunststoffbehältnis (20) nach zumindest einem der vorhergehenden Ansprüche,
**dadurch gekennzeichnet, dass**
das Versteifungselement (50) statische Eigenschaften des Kunststoffbehältnisses (20), wie eine Längsachsenbelastung (Topload) und/oder Durchmesserachsenbelastung (Sideload) erhöhen.

6. Kunststoffbehältnis (20) nach zumindest einem der vorhergehenden Ansprüche,
**dadurch gekennzeichnet, dass**
der Verlauf des Versteifungselements (50) auch Kraftverläufen im Falle einer Kraftbelastung des Kunststoffbehältnisses (20) folgen und/oder das Versteifungselement (50) organischen Formen wie zum Beispiel Rippen in Libellenflügeln entspricht oder zumindest teilweise ähnelt.

7. Kunststoffbehältnis (20) nach zumindest einem der vorhergehenden Ansprüche,
**dadurch gekennzeichnet, dass**
das Kunststoffbehältnis (20) vor einem Verschließen mit Stickstoff befüllt wurde.

8. Verfahren (100) zum Umformen von Kunststoffvorformlingen (10) zu Kunststoffbehältnissen (20), wobei an einem beweglichen Träger wenigstens eine und bevorzugt eine Vielzahl von Umformungsstationen (4) zum Umformen der Kunststoffvorformlinge (10) zu den Kunststoffbehältnissen (20) angeordnet ist und diese Umformungsstationen (4) wenigstens zeitweise während des Umformungsvorgangs entlang eines vorgegebenen Transportpfads bewegt werden, wobei die Umformungsstationen (4) jeweils Blasformanordnungen (6) aufweisen, wobei Blasformteile (62, 64) dieser Blasformanordnungen (6) zum Öffnen und Schließen der Blasformanordnungen (6) bewegt werden, und in einem geschlossenen Zustand der Blasformanordnung (6) in einem durch die Blasformteile (62, 64) gebildeten Hohlraum die Kunststoffvorformlinge (10) durch Beaufschlagung mit einem fließfähigen Medium zu den Kunststoffbehältnissen (20) umgeformt werden,
**dadurch gekennzeichnet, dass**
zumindest eine dem Kunststoffvorformling (10) zugewandte Innenfläche der Blasformteile (62, 64), zumindest einen Prägeabschnitt (30) in Form zumindest einer Oberflächenerhebung und/oder einer Oberflächensenkung zum Ausbilden zumindest einer Wanderhebung oder zumindest einer Wandsenkung zur Ausbildung einer Behältnisinformation an dem fertigen Behältnis aufweist, sodass die Behältnisinformation ein Negativabbild (31) des Prägeabschnittes (30) ist, und/oder es wird auf das fertige Behältnis eine digitale Wassermarke, insbesondere als die Behältnisinformation, aufgebracht.

9. Verfahren (100) nach Anspruch 8,
**dadurch gekennzeichnet, dass**
die Behältnisinformation auf dem fertigen Kunststoffbehältnis (20) eine Etiketteninformation ersetzt und dass das fertig hergestellte Behältnis frei von einem Etikett ist.

10. Verfahren (100) nach Anspruch 8 oder 9,
**dadurch gekennzeichnet, dass**
während des Umformungsvorgangs das sich ausdehnende Kunststoffbehältnis (20) durch das fließfähige Medium gegen diese Innenfläche gepresst wird, sodass durch diese Druckbeaufschlagung der Prägeabschnitt (30) auf der Außenfläche des Kunststoffbehältnisses (20) als ein Negativabbild (31) die Behältnisinformation hinterlässt.

11. Verfahren (100) nach wenigstens einem der vorangegangenen Ansprüche 8 bis 10,
**dadurch gekennzeichnet, dass**
der Prägeabschnitt (30) erhabene Bereiche (zu engl.: debossed areas) und/oder vertiefte Bereiche (zu engl.: embosses areas) aufweist und/oder der Prägeabschnitt (30) derart ausgebildet und/oder angeordnet und/oder an solchen Orten an der Innenfläche des Seitenteils (40) positioniert ist, dass die Behältnisinformation am fertigen Kunststoffbehältnis (20) zumindest teilweise mit einer Milchglasstruktur innerhalb der Außenwand des Kunststoffbehältnisses (20) gebildet ist.

12. Verfahren (100) nach dem vorhergehenden Anspruch,
**dadurch gekennzeichnet, dass**
nach dem Umformungsvorgang zumindest der Prägeabschnitt (30) zumindest stellenweise mittels einer Strahlungs- und/oder Erwärmungsquelle behandelt wird, um so eine Materialstrukturveränderung zu erzeugen, insbesondere wobei die Strahlungs- und/oder Erwärmungsquelle eine Strahlungsquelle, zum Beispiel eine Laserquelle, umfasst, welche auf das Material der äußeren Behältniswand (60), also auf den die Behältnisinformation, trifft, wobei bevorzugt die Materialstrukturveränderung durch einen zumindest teilweise auskristallisierten Bereich gebildet ist.

13. Vorrichtung (1) zum Umformen von Kunststoffvorformlingen (10) zu Kunststoffbehältnissen (20), wobei an einem beweglichen Träger wenigstens eine und bevorzugt eine Vielzahl von Umformungsstationen (4) zum Umformen der Kunststoffvorformlinge (10) zu den Kunststoffbehältnissen (20) angeordnet ist und diese Umformungsstationen (4) wenigstens zeitweise während des Umformungsvorgangs entlang eines vorgegebenen Transportpfads bewegbar sind, wobei die Umformungsstationen (4) jeweils Blasformanordnungen (6) aufweisen, wobei die Blasformteile (62, 64) dieser Blasformanordnungen (6) zum Öffnen und Schließen der Blasformanordnungen (6) bewegbar sind, und in einem geschlossenen Zustand der Blasformanordnung (6) in einem durch die Blasformteile (62, 64) gebildeten Hohlraum die Kunststoffvorformlinge (10) durch Beaufschlagung mit einem fließfähigen Medium zu den Kunststoffbehältnissen (20) umformbar sind,
**dadurch gekennzeichnet, dass**
zumindest eine dem Kunststoffvorformling (10) zugewandte Innenfläche der Blasformteile (62, 64), zumindest einen Prägeabschnitt (30) in Form zumindest einer Oberflächenerhebung und/oder einer Oberflächensenkung an der Innenfläche zum Ausbilden zumindest einer Wanderhebung oder zumindest einer Wandsenkung zur Ausbildung einer Behältnisinformation an dem fertigen Behältnis aufweist, sodass die Behältnisinformation ein Negativabbild (31) des Prägeabschnittes (30) ist, insbesondere sodass diese als Behältnisinformation ausgebildeter Prägeabschnitt (30) eine Etiketteninformation ersetzt und das dann fertig hergestellte Behältnis frei von einem Etikett ist und/oder es ist auf das fertige Behältnis eine digitale Wassermarke, insbesondere als die Behältnisinformation aufgebracht.

14. Vorrichtung (1) nach wenigstens einem der vorangegangenen Ansprüche,
**dadurch gekennzeichnet, dass**
der Prägeabschnitt (30) durch zumindest zwei entlang der Innenfläche zumindest eines der Seitenteile (40) benachbarte Segment-Prägeabschnitte (34) gebildet ist, wobei zwischen den Segment-Prägeabschnitten (34) zumindest ein Versteifungsbereich (50) erzeugender Abschnitt, zum Beispiel in Form einer Umfangsrille, angeordnet ist.

15. Vorrichtung (1) nach dem vorhergehenden Anspruch,
**dadurch gekennzeichnet, dass**
der Versteifungsbereich (50) des Kunststoffbehältnisses (20) mittels zumindest einer Oberflächenerhebung und/oder einer Oberflächensenkung an der Innenfläche zumindest eines Seitenteils (40) gebildet wird, wobei diese Erhebung oder Senkung von solchen verschieden sind, welche die Behältnisinformation ausbilden und/oder der Versteifungsbereich (50) im fertigen Kunststoffbehältnis (20) in Form zumindest einer Versteifungsrippe ausgebildet ist.
